# EUROPÄISCHE PATENTSCHRIFT

(11) **EP 3 804 495 B1**
(45) Veröffentlichungstag und Bekanntmachung des Hinweises auf die Patenterteilung: **01.04.2026**
(21) Anmeldenummer: 20200328.1
(22) Anmeldetag: 06.10.2020
(51) Int. Cl.: A01D 41/14, A01D 57/04

(54) **SCHNEIDWERK MIT SICHERUNG FÜR EINE HÖHENVERSTELLBARE HASPEL**
CUTTING DEVICE WITH SECURING MEANS FOR A HEIGHT-ADJUSTABLE REEL
MÉCANISME DE COUPE POURVU DE SÉCURITÉ POUR UN RABATTEUR RÉGLABLE EN HAUTEUR

(30) Priorität: 11.10.2019 DE 102019127508
(43) Veröffentlichungstag der Anmeldung: 14.04.2021
(73) Patentinhaber: Carl Geringhoff GmbH & Co. KG, 59227 Ahlen (DE)
(72) Erfinder: SUDHUES, Steffen, 59227 Ahlen (DE); POKRIEFKE, Michael, 27798 Hude (DE)
(74) Vertreter: Weeg, Thomas

(56) Entgegenhaltungen:
- EP-A1- 2 253 195
- EP-A1- 2 572 568
- DE-A1- 19 508 887
- GB-A- 2 173 309

## Beschreibung

Die vorliegende Erfindung bezieht sich auf eine Erntemaschine mit einem Schneidwerk nach dem Oberbegriff des Anspruchs 1.

Wenn in dieser Beschreibung von "vorne" und "hinten" die Rede ist, so werden diese Begriffe immer bezogen auf die Arbeitsrichtung des Schneidwerks verwendet. Die Arbeitsrichtung ist die Richtung, in die das Schneidwerk bewegt wird, um Erntegut zu schneiden.

Ein hydraulischer Verstellantrieb der Haspel eines Schneidwerks besteht heute aus einem oder mehreren Hydraulikzylindern, mit denen die Haspeltragarme aufwärts und abwärts beweglich sind. Der oder die Hydraulikzylinder sind beweglich, indem beispielsweise ein 2/3-Wege-Hydraulikventil so geschaltet wird, dass entweder eine Hydraulikflüssigkeit von einer Hydraulikpumpe der Druckseite des Hydraulikzylinders zugefördert wird, wenn die Haspel angehoben werden soll, oder die Hydraulikflüssigkeit von der Druckseite des Hydraulikzylinders abfließen kann, wenn die Haspel abgesenkt werden soll. Wenn die Haspel in einer aktuellen Höhenlage verbleiben soll, steht das Hydraulikventil in einer Neutralstellung, in der die an das Hydraulikventil angeschlossenen hydraulischen Zulauf- und Ablaufleitungen geschlossen sind und dadurch der Druckraum des Hydraulikzylinders abgeschlossen ist, so dass sich der oder die Hydraulikzylinder nicht bewegen können. Das beschriebene Hydraulikventil wird während des Betriebs der Erntemaschine über einen Bedienhebel in der Fahrerkabine betätigt, indem ein Fahrer eine Taste "Haspel heben" oder "Haspel senken" betätigt, wodurch dann das Hydraulikventil aus der Neutralstellung für die Dauer der Tastenbetätigung in die entsprechende Funktionsstellung verstellt wird. Fehlt es an einer Betätigung einer Taste zur Höhenverstellung der Haspel, bleibt das Hydraulikventil in der Neutralstellung.

Eine Vorrichtung zur Haspelhöhenverstellung ist aus der Schrift EP 2 253 195 A1 bekannt. Die dort offenbarte Verstellvorrichtung verfügt über einen Hydraulikkreislauf, bei dem die sonst voneinander isolierten geschlossenen Hydraulikkreisläufe zur Bewegung der Verstellzylinder in einer Synchronisierungsstellung eines gesonderten Hydraulikventils untereinander Hydraulikflüssigkeit austauschen können, um einen verloren gegangenen Gleichlauf der für die Höhenverstellung vorgesehenen Hydraulikzylinder wieder herzustellen.

Aus der Schrift DE 195 08 887 A1 ist eine Haspel-Höhenverstellung bekannt, bei der ein manuelles "Haspel senken"-Bediensignal einer Bedienperson während des laufenden Erntebetriebs von einem Sensorsignal immer dann übersteuert wird, wenn der Sensor, der das Sensorsignal erzeugt, einen Kontakt zu einer Kulisse hat, durch deren räumlichen Verlauf die Haspel auf einer Höhe gehalten wird, bei der ein Kontakt der Haspelzinken mit dem Messerklingen des Messerbalkens des Schneidwerks ausgeschlossen ist.

Die bekannte Funktionalität des 3/2-Wege-Hydraulikventils reicht zur Steuerung der Haspelhöhe während des Arbeitsbetriebs der Erntemaschine aus. Die Neutralstellung des 3/2-Wege-Hydraulikventils reicht aber für sich nicht aus, um eine Haspel außerhalb des Erntebetriebs in einer erhöhten Stellung so zu sichern, dass darunter ohne eine zusätzliche Sicherung Wartungsarbeiten am Schneidwerk ausgeführt werden könnten. Es besteht ein Restrisiko, dass sich die Haspel auch in der Neutralstellung des 3/2-Wege-Ventils noch unkontrolliert absenken könnte.

Bisher ist es deshalb zur Sicherung von Wartungsarbeiten erforderlich, die Haspel mit den Haspeltragarmen in die oberste Position zu fahren, um dann mechanische Verriegelungen an jedem einzelnen Haspeltragarm einzulegen, damit die Haspel gegen ein ungewolltes Herabfallen gesichert ist. Ein Beispiel hierfür sind die TruFlex-Draper-Schneidwerke der Firma Carl Geringhoff Vertriebsgesellschaft mbH & Co.KG. Wenn die Wartungsarbeiten beendet sind, müssen alle mechanischen Riegel wieder entfernt werden. Das ist mit einem erheblichen Zeitaufwand verbunden, weil der Fahrer mehrfach um das gesamte Schneidwerk herumlaufen und an verschiedenen Positionen Riegel einlegen und danach wieder herausnehmen muss. Solche Wartungsarbeiten können mehrmals täglich notwendig sein, beispielsweise, um abgebrochene Messerklingen auszuwechseln oder Verstopfungen im Schneidwerk zu beseitigen. Der erhebliche Zeitaufwand und der damit einhergehende Effizienzverlust der Erntemaschine bergen die Gefahr in sich, dass Nutzer der Maschine bei Wartungsarbeiten auf die mechanischen Sicherungen verzichten, weil ihnen diese zu aufwendig erscheinen.

Es ist die Aufgabe der vorliegenden Erfindung, die Sicherung der Haspel bei Wartungsarbeiten am Schneidwerk zu vereinfachen.

Die Aufgabe wird für eine gattungsgemäße Erntemaschine durch eine Vorrichtung gemäß den kennzeichnenden Merkmalen des Anspruchs 1 gelöst.

Die Verriegelung des hydraulischen Verstellantriebs über die gesonderte Verriegelungsfunktion des Hydraulikkreislaufs ist als eine Schutzmaßnahme gegen Risiken durch solche herabfallende Gegenstände bei Wartungsarbeiten nutzbar, die mit dem Hydraulikkreislauf bewegt werden. Die hydraulische Verriegelung sieht nun vor, über ein Hydraulikventil die Hydraulikleitungen vom und/oder zum hydraulischen Verstellantrieb zu sperren. Das Hydraulikventil ist zwischen einer Schaltposition, in der es den Hydraulikkreislauf verriegelt, und einer Schaltposition, in der es den Hydraulickreislauf entriegelt, verstellbar. Sind die Hydraulikleitungen und -zylinder durch das Hydraulikventil verriegelt und dicht, kann sich ein hydraulischer Verstellantrieb nicht mehr bewegen, wenn der Durchfluss von Hydraulikflüssigkeit im Hydraulikventil gesperrt ist.

Die gesonderte Verriegelungsfunktion erfolgt nicht über die herkömmliche Taste zum Heben oder Senken der Haspel, sondern es handelt sich um einen separaten Sicherheitsschalter, der nur für die Aktivierung der Sicherungsfunktion vorgesehen ist. Er erfordert dadurch eine bewusste Entscheidung, die Haspel gegen ein ungewolltes Absenken schützen zu wollen. Er muss gesondert betätigt werden, um eine Sicherung herbeizuführen und diese wieder aufzuheben. Der Sicherheitsschalter kann an der Erntemaschine und/oder am Schneidwerk angebracht sein. Der Hydraulikkreislauf, der über den Sicherheitsschalter abgesichert werden kann, ist also nicht auf den Teil beschränkt, der sich am Schneidwerk befindet, sondern kann sich auch auf den Teile eines Hydraulikkreislaufs erstrecken, der einen Bestandteil des Hydraulickreislaufs der Erntemaschine bildet.

Zur Sicherung gegen Risiken aus schwebenden Lasten reicht es, wenn der Fahrer der Erntemaschine zu Beginn einer Wartungsarbeit den Sicherheitsschalter betätigt, um dadurch den Durchfluss von Hydraulikflüssigkeit durch das Hydraulikventil zu sperren und die Haspel gegen Gefahren durch schwebende Lasten zu sichern. Mit der einmaligen Betätigung des Sicherheitsschalters kann der Fahrer der Erntemaschine alle Hydraulikzylinder, die in einem Schneidwerk für die Bewegung der Haspeltragarme verwendet sind, gegen unerwünschte Bewegungen sperren. Das bedeutet für den Fahrer eine erhebliche Zeitersparnis. Die Verriegelung kann er wieder aufheben, indem er den Sicherheitsschalter erneut einmalig betätigt und dadurch die Stromversorgung der Hydraulikventile wieder herstellt. Es ist nicht mehr erforderlich, zu jedem einzelnen Haspeltragarm hinzugehen und dort mechanische Sicherungen anzubringen und wieder zu entfernen. Es genügt die Betätigung eines einzigen Sicherheitsschalters, was im Vorbeigehen an der Maschine erledigt werden kann, wenn der Sicherheitsschalter günstig platziert ist. Die schnelle und unkomplizierte Ein- und Ausschaltung der Sicherung macht es wahrscheinlicher, dass die Sicherung im Bedarfsfall auch aktiviert wird.

Nach einer Ausgestaltung der Erfindung handelt es sich bei dem Hydraulikventil um ein elektrisch angesteuertes Hydraulikventil, das bei einer Unterbrechung der Stromzufuhr durch eine mechanische Federrückstellung zwangsläufig in eine Schließstellung fährt. Das Hydraulikventil ist beispielsweise über die elektrische Erregung eines Elektromagneten schaltbar. Bei einer Unterbrechung der Stromzufuhr ist der Elektromagnet stromlos, was zu einem unkontrollierten Absturz der Haspel aus einer erhobenen Stellung führen könnte. Das Hydraulikventil wird dann aber durch die mechanische Federrückstellung zwangsläufig und unabhängig von einer Stromversorgung in seine Schließstellung bewegt. Durch die Kombination der elektrischen Ansteuerung des Ventils mit einer mechanischen Federrückstellung ist das Hydraulikventil leicht mit einem elektrischen Schalter umschaltbar zwischen einer ersten Stellung, in der es Bewegungen des hydraulischen Antriebs zulässt, und einer zweiten Stellung, in der es keine Bewegungen des hydraulischen Antriebs zulässt, wobei aber über die mechanische Federrückstellung sichergestellt ist, dass das Hydraulikventil die Beweglichkeit des hydraulischen Antriebs auch dann sicher absperrt, wenn es zu einer Unterbrechung der Stromzufuhr kommt. Die Absperrung bleibt also insbesondere auch dann gesichert, wenn die Stromversorgung des Magnetventils ausfallen sollte, wodurch das System eigensicher ist. Der Hydraulikkreislauf ist dadurch immer gegen ein unkontrolliertes Absacken der Haspel aus einer angehobenen Wartungsposition abgesichert und erfüllt dadurch erhöhte Anforderungen an die Sicherheit der Absicherung gegen schwebende Lasten.

Nach einer Ausgestaltung der Erfindung sperrt das Hydraulikventil die Zulauf- und Rücklaufleitung des hydraulischen Verstellantriebs. Durch die Absperrung sowohl der Zulauf- als auch der Rücklaufleitung ergibt sich eine doppelte Sicherheit, weil der hydraulische Verstellantrieb sowohl von der Zulauf- als auch von der Rücklaufseite her gegen ungewollte Bewegungen gesperrt ist.

Nach einer Ausgestaltung der Erfindung handelt es sich bei dem Hydraulikventil um ein elektrisches Magnetventil, am Schneidwerk und/oder an der Erntemaschine ist ein Sicherheitsschalter vorhanden, der mit der Elektrik des elektrischen Magnetventils verbunden ist, und durch die Betätigung des Sicherheitsschalters ist das Hydraulikventil von der Stromzufuhr getrennt. Wenn der Fahrer der Erntemaschine auf den Sicherheitsschalter drückt, wird die elektrische Versorgung unterbrochen, um die Haspel gegen Gefahren durch schwebende Lasten zu sichern. Das bedeutet für den Fahrer eine erhebliche Zeitersparnis. Die Verriegelung kann er wieder aufheben, indem er den Sicherheitsschalter erneut betätigt und dadurch die Stromversorgung der Hydraulikventile wieder herstellt. Es genügt die Betätigung eines einzigen Sicherheitsschalters.

Nach einer Ausgestaltung der Erfindung ist der Sicherheitsschalter mit einer Steuerungselektronik verbunden und von der Steuerungselektronik bei Vorliegen eines Auslösekriteriums fernbetätigbar. Die Fernbetätigung kann über ein kabelgebundenes Signal, wie beispielsweise eine direkte Verbindungsleitung oder ein Busnetz, oder über ein Funk- oder Lichtsignal erfolgen, das vom Sicherheitsschalter empfangen und in ein entsprechendes Stellsignal an das Hydraulikventil umgewandelt wird. Die Möglichkeit, eine aktuelle Haspelstellung verriegeln zu können, ist nicht nur bei Wartungsarbeiten, sondern auch bei bestimmten Betriebssituationen des Schneidwerks von Vorteil. Da der Betrieb einer Erntemaschine zunehmend mit einer entsprechenden Steuerungselektronik überwacht wird, ist diese besonders dazu geeignet, um bei einem erkannten Bedarf eine aktuelle Haspelposition zu verriegeln, indem über eine Verbindung zwischen dem Sicherheitsschalter und der Steuerungselektronik von der Steuerungselektronik ein entsprechender Sperrbefehl an den Sicherheitsschalter übermittelt wird. Dass ein Auslösekriterium für eine Sperre einer aktuellen Haspelposition vorliegt, kann sich aus einer manuellen Bedieneingabe des Fahrers der Erntemaschine in die Steuerungselektronik, aber auch aus softwaregestützten Kontroll- oder Arbeitsroutinen der Steuerungselektronik oder Alarmmeldungen von Sensoren ergeben, die mit der Steuerungselektronik verbunden sind. Bei der Steuerungselektronik kann es sich aber nicht nur um die Steuerungselektronik der Erntemaschine, sondern auch um eine Steuerungselektronik handeln, die autonom von der Erntemaschine im Schneidwerk vorhanden ist oder die als integrierte oder von der Steuerungselektronik der Erntemaschine separate Zusatzelektronik für das Schneidwerk in der Erntemaschine angeordnet werden kann.

Nach einer Ausgestaltung der Erfindung ist die Steuerungselektronik mit einem Sensor verbunden, der die aktuelle Höheneinstellung des Schneidwerks, den aktuellen Betriebsmodus des Schneidwerks und/oder den Verriegelungsstatus einzelner Schneidwerkskomponenten ermittelt.

Der Sensorwert für die aktuelle Höheneinstellung des Schneidwerks kann beispielsweise von Interesse sein, wenn das Schneidwerk sehr bodennah betrieben wird und mit Ausweichbewegungen des Schneidwerks insgesamt oder von Schneidwerksteilen nach oben hin gerechnet werden muss, wenn das Schneidwerk über Bodenerhebungen bewegt wird. In solchen Betriebsbedingungen ist es empfehlenswert, dass die Haspel nicht so tief und nah über dem Messerbalken gehalten wird, dass die Haspelzinken schon bei nur geringen Aufwärtsbewegungen des Messerbalkens oder anderer Teile des Schneidwerks mit diesen kollidieren können. Durch die Sensordaten des Sensors zur Ermittlung der aktuellen Höheneinstellung des Schneidwerks kann die Steuerungselektronik eine Absenkung der Haspel bis in einen Bereich hinein verhindern, in dem eine Beschädigung von Haspelzinken droht, wenn die Steuerungselektronik den Verstellantrieb bei dem Erreichen eines Schwellwerts durch ein Stellsignal an den Sicherheitsschalter verriegelt.

Genauso kann eine Verriegelung des hydraulischen Verstellantriebs ab einer bestimmten Haspeltiefe an sinnvoll sein, wenn schon allein aufgrund des aktuell aktiven Betriebsmodusses des Schneidwerks mit einer sehr engen Bodenkopierung des Schneidwerks und des Messerbalkens ein zu geringer Abstand der Haspel zum Messerbalken eine Beschädigung des Messerbalkens als wahrscheinlich erwarten lässt. So kann die Steuerungselektronik den hydraulischen Verstellantrieb durch einen Stellbefehl an den Sicherheitsschalter verriegeln, wenn der Fahrer der Erntemaschine bei einem im Bodenkopiermodus betriebenen Schneidwerk versucht, die Haspel tiefer abzusenken, als das in diesem Betriebsmodus des Schneidwerks ohne Beschädigungsrisiken möglich erscheint. Eine Hubbegrenzung für die Haspel ist sinnvoll, um sicherzustellen, dass die an die Haspel angebauten Haspelzinken bei einer tiefen Absenkung der Haspel nicht in den Wirkbereich der Messerklingen des Messerbalkens geraten. Je nachdem, wie flexibel der Messerbalken am Schneidwerk gehalten ist, können verschiedene Abstandsmaße sinnvoll sein. So kann bei einem starr gehaltenen Messerbalken ein Abstand der Haspelzinkenspitzen von 50 mm zum Messerbalken als angemessen angesehen werden, um das Risiko auszuschließen, dass die Haspelzinkenspitzen in den Messerbalken geraten könnten und abgeschnitten werden oder Messerklingen abbrechen. Ist der Messerbalken jedoch an höhenbeweglichen Tragarmen oder Schwingen gehalten, damit sich der Messerbalken besser einer Bodenkontur anpassen kann, kann ein Mindestabstand von beispielsweise 200 mm sinnvoll sein. Je nachdem, in welchem Modus das Schneidwerk betrieben wird, können die Hydraulikventile in Abhängigkeit vom ausgewählten Betriebsmodus elektrisch so geschaltet und angesteuert sein, dass jeweils die zum aktuellen Betriebsmodus passende Hubbegrenzung eingeschaltet ist. Die Hubbegrenzung kann über eine maschineneigene oder erntemaschinenseitige Software automatisiert oder durch eine Bedienereingabe aktiviert werden.

Die Steuerungselektronik kann den hydraulischen Verstellantrieb auch verriegeln, wenn bestimmte Schneidwerkskomponenten nicht verriegelt sind, wie beispielsweise schwenkbewegliche, aber in ihren Schwenkbewegungen verriegelbare Tragarme, die am Rahmen gehalten sind und den Messerbalken halten. Sind die Tragarme nicht verriegelt, können sie mit dem Messerbalken so weit nach oben schwenken, dass eine Kollision mit der Haspel drohen würde, wenn diese zu tief abgesenkt wäre. Eine solch tiefe Haspelstellung kann durch eine entsprechende Verriegelung des hydraulischen Verstellantriebs in einer ausreichenden Höhe verhindert werden.

Schließlich ist aber auch eine Verriegelung der Haspel insbesondere in einem geringen Abstand zum Messerbalken denkbar. Das kann beispielsweise von Interesse sein, wenn das Schneidwerk angehoben worden ist, wie das etwa beim Erreichen des Feldendes erfolgt, und die Haspel durch eine besonders tiefe Stellung das soeben noch geschnittene Erntegut sicher abfördern soll. Hier kann über eine Feldendeautomatik der Erntemaschine oder eine manuelle Eingabe des Fahrers der Erntemaschine eine Putzfunktion aktiviert werden, bei der die Haspel in einer niedrigen Position verriegelt ist, in der sie über den Messerbalken und die vorderen Förderflächen des Schneidwerks streicht und nicht aus dieser niedrigen Position ohne eine Aufhebung der Verriegelung angehoben werden kann. Die Aktivierung der Putzfunktion kann mit einer Sensorabfrage kombiniert werden, beispielsweise, um zu klären, ob eine Mindesthöhe des Schneidwerks für die Einleitung der Absenkbewegung der Haspel erreicht worden ist und/oder ob die Verschwenkbarkeit der Tragarme verriegelt worden ist.

Nach einer Ausgestaltung der Erfindung ist der hydraulische Verstellantrieb in einer vorwählbaren oder von einer Steuerungselektronik vorgegebenen maximalen Hubhöhe der Haspel verriegelbar. Durch die Verriegelung des hydraulischen Verstellantriebs ab einer bestimmten Hubhöhe der Haspel können vom Fahrer der Erntemaschine eingegebene Anhebebefehle, die in der aktuellen Betriebssituation aber nicht sinnvoll sind oder sogar ein Beschädigungsrisiko in sich tragen, blockiert werden. Solche Verriegelungen in einer maximalen Hubhöhe sind beispielsweise sinnvoll, wenn die über die vorgegebene maximale Hubhöhe hinaus angehobene Haspel bei einem stark angehobenen Schneidwerk mit der Fahrerkabine kollidieren würde.

Nach einer Ausgestaltung der Erfindung sind das Hydraulikventil und/oder die Zulauf- und/oder Rücklaufleitungen des hydraulischen Verstellantriebs mit einem Sensor zur Ermittlung von Leckölströmen ausgestattet, der bei der Detektion eines Leckölstroms ein Warnsignal auslöst. Über die Detektion von Leckölströmen kann ein drohendes ungewolltes Absinken der Haspel während Wartungsarbeiten früh erkannt und ein entsprechendes Warnsignal generiert werden. Eventuell verbleibende geringe Risiken von Verletzungen des Wartungspersonals können durch das frühzeitig abgegebene Warnsignal zusätzlich noch verringert werden.

Nach einer Ausgestaltung der Erfindung ist das Hydraulikventil am Schneidwerk angeordnet. Durch die direkte Anordnung des Hydraulikventils am Schneidwerk ist es möglich, den Hydraulikkreislauf direkt vor dem hydraulischen Verstellantrieb abzusichern. Der mit dem Hydraulikventil abgesicherte Teil des Hydraulikkreislaufs bleibt dadurch so klein wie möglich, um mit ihm nur die Haspel gegen ein unkontrolliertes Absenken abzusichern. Dadurch wird auch ein eventuelles Restrisiko eventueller Leckagen, Leitungsbrüche und sonstiger Funktionsstörungen auf ein unvermeidliches Minimum begrenzt. Es werden nur die am Schneidwerk montierten Hydraulikleitungen und Hydraulikzylinder einschließlich der jeweiligen Anschlüsse und dem als Verriegelung genutzten Hydraulikventil gegebenenfalls nachgeordneten Hydraulikventile abgesichert. Fehler und Störungen des auf der Erntemaschine montierten Hydraulickreislaufs können somit die Sicherheit der hydraulischen Verriegelung der Haspel nicht stören.

Nach einer Ausgestaltung der Erfindung befindet sich der Sicherheitsschalter auf der in Arbeitsrichtung des Schneidwerks gesehen linken Rückseite oder der Oberseite des linken Rahmens des Schneidwerks. Da der Fahrer einer Erntemaschine regelmäßig auf der linken Maschinenseite aus der Kabine der Erntemaschine aussteigt, ist der Sicherheitsschalter für den Fahrer in diesem Bereich gut erreichbar platziert. Der Fahrer kann die Haspel im Vorbeigehen durch Drücken des Sicherheitsschalters gegen ein unerwünschtes Absenken absichern und diese Sicherung durch ein erneutes Drücken wieder aufheben. Zusätzliche Arbeitsgänge oder Laufwege sind für Sicherungszwecke nicht erforderlich.

Nach einer Ausgestaltung der Erfindung ist das Hydraulikventil als ein hydraulisch entsperrbares Rückschlagventil ausgebildet, das den Rückfluss aus dem Hydraulickreislauf sperrt, aber den druckseitigen Zulauf von Hydraulikflüssigkeit zur Entriegelung des Hydraulikventils zulässt. Eine solche Lösung ist sinnvoll, wenn die Haspel mit einfach wirkenden Hydraulikzylindern angehoben wird, die über eine gemeinsame Zu- und Ablaufleitung mit der Hydraulik der Erntemaschine verbunden sind. Wenn es nicht möglich ist, ein elektrisches Signal von der Fahrerkabine aus an das Hydraulikventil zur Entsperrung zu senden, weil keine entsprechende Leitung vorgesehen oder vorhanden ist, und die Haspel sich in einem gesperrten Bereich befindet, ist es über die Rückschlagventilfunktion des Hydraulikventils zumindest möglich, zusätzliche Hydraulikflüssigkeit zum Hydraulikzylinder zu leiten und die Haspel soweit zu bewegen, dass sie sich wieder in einem auch elektrisch entsperrten Bereich befindet. So ist auch eine hydraulische statt einer elektrischen Entriegelung des Hydraulikventils möglich.

Nach einer Ausgestaltung der Erfindung ist das Hydraulikventil den Verstellantrieben für einen einzelnen oder mehrere Haspeltragarme zugeordnet. Indem ein jeweiliges Hydraulikventil für den Verstellantrieb eines einzelnen oder mehrerer Haspeltragarme oder mehreren Verstellantrieben für mehrere Haspeltragarme zugeordnet ist, kann eine einteilige Haspel schon über die Sperrung nur eines Hydraulikzylinders gesichert werden. Bei Haspeln, die aus mehreren Haspelteilen zusammengesetzt sind, die jeweils nur eine Teilarbeitsbreite abdecken, können auch nur einzelne Haspelteile in einer ausgewählten Höhe gesperrt werden, die sie nicht über- oder unterschreiten sollen. Die Haspelteile sind dann bei Bedarf in unterschiedlichen Stellhöhen zueinander verriegelbar.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von schräg vorne auf ein Schneidwerk,
- Fig. 2:: eine Ansicht von schräg vorne auf ein Tragwerk ohne Haspelteile,
- Fig. 3:: das in Fig. 2 gezeigte Tragwerk ohne Zwischenwelle aus einer anderen Perspektive,
- Fig. 4:: einen Hydraulikschaltplan für die Haspelhöhenverstellung, und
- Fig. 5:: einen Hydraulikschaltplan mit Hydraulikventilen mit einem Bypass.

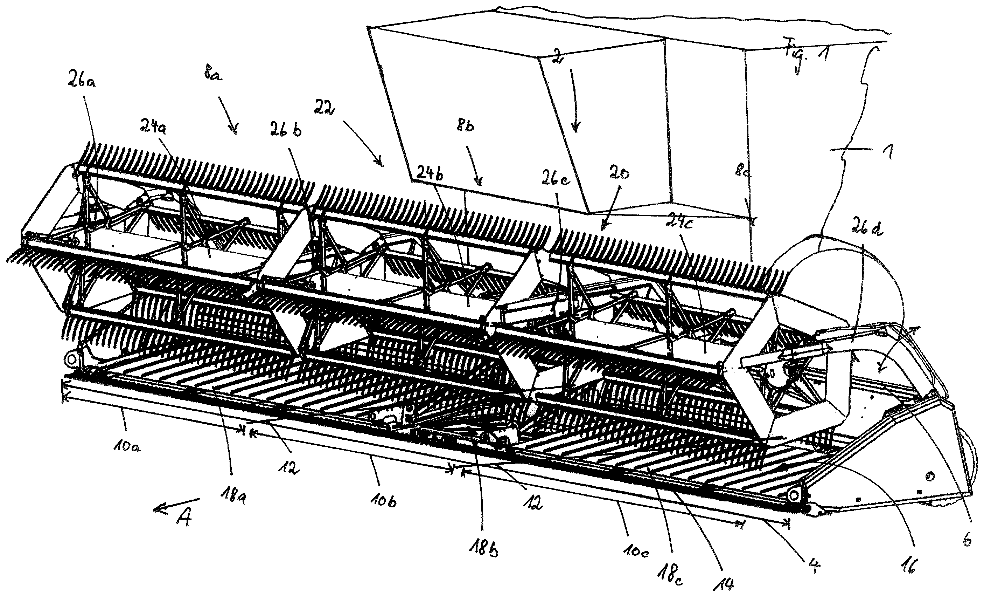

In Fig. 1 ist eine Ansicht von schräg vorne auf ein Schneidwerk 2 gezeigt. Das Schneidwerk 2 verfügt über eine Arbeitsbreite 4. Das Schneidwerk 2 besteht aus einem Rahmen 6, der aus drei Rahmenteilen 8a, 8b, 8c gebildet ist. Jedes Rahmenteil 8a, 8b, 8c deckt eine zugehörige Teilarbeitsbreite 10a, 10b, 10c ab. Die beiden äußeren Rahmenteile 8a, 8c sind im Verhältnis zum mittigen Rahmenteil 8b um die Achsen 12 schwenkbar, die sich in Arbeitsrichtung A des Schneidwerks 2 erstrecken. Für die Erfindung ist es aber ohne Bedeutung, ob es sich bei dem Schneidwerk um eines mit einem einteiligen oder mehrteiligen Rahmen handelt, und ob die Rahmenteile gelenkig miteinander verbunden sind oder nicht. Die Erfindung wird nachfolgend anhand eines dreiteiligen Schneidwerks als ein Ausführungsbeispiel erläutert.

An der Vorderseite des Schneidwerks 2 ist ein Messerbalken als Schneidelement 14 angebracht. Der Messerbalken ist oszillierend angetrieben und verfügt über eine Anzahl von Messerklingen, die das auf dem Feld stehende Erntegut abschneiden. Bei der Vorfahrt der Erntemaschine in den stehenden Bestand des Ernteguts fällt das geschnittene Erntegut auf die Förderflächen 16 im Schneidwerk 2. Mit Förderorganen 18 - im Ausführungsbeispiel die beiden äußeren Bandförderer 18a, 18c, die das geschnittene Erntegut quer zur Arbeitsrichtung in die Mitte des Schneidwerks 2 befördern, und der Bandförderer 18b, der das im mittleren Bereich des Schneidwerks 2 angesammelte Erntegut nach hinten abfördert - wird das Erntegut von den Schneidelementen 14 zur Abgabestelle 20 befördert. An der Abgabestelle 20 wird das geschnittene Erntegut an die Erntemaschine übergeben.

Damit die Halme des Ernteguts beim Schnitt gut in das Schneidelement 14 einlaufen, nicht seitlich wegfallen und nach dem Schnitt gut auf der Förderfläche abgelegt werden, befindet sich oberhalb des Schneidelements 14 eine rotierend antreibbare Haspel 22. Im Ausführungsbeispiel ist die Haspel 22 dreigeteilt in die Haspelteile 24a, 24b, 24c. Im Bereich der Trennstellen zwischen den Haspelteilen 24a, 24b, 24c befinden sich die Haspeltragarme 26b, 26c. Die Haspel 22 legt sich bei ihrer Rotation an die Getreidestängel an und wirft diese entgegen der Fahrtrichtung A auf die Förderfläche 16.

Die Haspelteile 24a, 24b, 24c sind von den Haspeltragarmen 26a, 26b, 26c, 26d gehalten. Das mittig angeordnete Haspelteil 24b ist dabei von den Haspeltragarmen 26b, 26c gehalten, die auch die nach innen weisenden Wellenstummel der Haspelwellen der äußeren Haspelteile 24a, 24c halten. Die Haspeltragarme 26b, 26c tragen also jeweils die Wellenstummel von zwei Haspelteilen, während die äußeren Haspeltragarme 26a, 26d nur die nach außen weisenden Wellenstummel der äußeren Haspelteile 24a, 24c tragen. Die Haspeltragarme 26 sind in Richtung des Doppelpfeils in vertikaler Richtung verstellbar, woraus sich eine unterschiedliche Höhenlage der Haspel 22 ergibt. Die Haspelteile 24a, 24b, 24c sind zusätzlich noch in horizontaler Richtung verstellbar, was ebenfalls durch einen entsprechenden Doppelpfeil angedeutet ist.

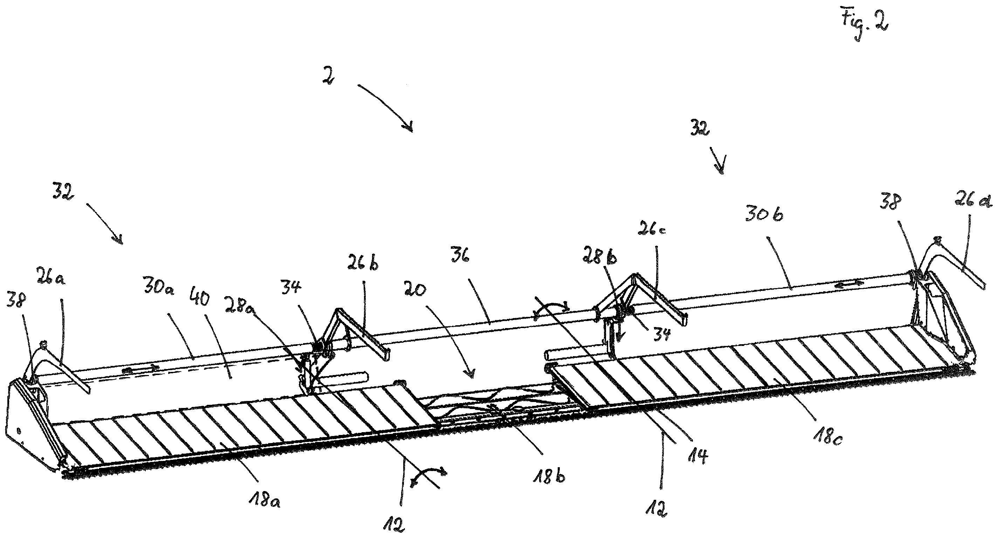

**In** Fig. 2 ist eine Ansicht von schräg vorne auf ein Schneidwerk 2 ohne den Rahmen 6, die Haspelteile 24a, 24b, 24c und sonstige Bauteile gezeigt. In dieser reduzierten Darstellung ist gut erkennbar, dass die Haspeltragarme 26a, 26b über den hydraulischen Verstellantrieb 28a und die Haspeltragarme 26c, 26d über den hydraulischen Verstellantrieb 28b verstellbar sind. Die Haspeltragarme 26a, 26b sind über die Torsionswelle 30a miteinander verbunden, während die Haspeltragarme 26c, 26d über die Torsionswelle 30b miteinander verbunden sind. Eine Verstellbewegung, die ein hydraulischer Verstellantrieb 28a, 28b auf einen Haspeltragarm 26b, 26c ausübt, wird über die Torsionswellen 30a, 30b auch auf die Haspeltragarme 26a, 26d übertragen. Die Haspeltragarme 26a, 26b mit der Torsionswelle 30a sowie die Haspeltragarme 26c, 26d mit der Torsionswelle 30d bilden jeweils ein Haspeltragwerk, um die Haspelteile 24a und 24c zu halten. Die Haspeltragarme 26b, 26c können zusätzlich noch das mittlere Haspelteil 24b halten. Das mittlere Haspelteil 24b wird dann zusammen mit den Haspelteilen 24a, 24c verschwenkt, je nachdem, wie sich die Haspeltragarme 24b, 24c bewegen.

Da die Rahmenteile 8a, 8d um das mittlere Rahmenteil 8b um die Achsen 12 schwenkbar sind, und da die Torsionswellen 30a, 30b in vertikaler Richtung beabstandet zu den Achsen 12 angeordnet sind, ergeben sich bei entsprechenden Schwenkbewegungen an den äußeren Enden der Torsionswellen 30a, 30b Längendifferenzen im Verhältnis zu den äußeren Enden der zugehörigen Rahmenteile 8a, 8c, die durch jeweilige Doppelpfeile angedeutet sind. Die Torsionswellen 30a, 30b sind an fixen Lagerpunkten 34 gehalten und abgestützt. Im Ausführungs-beispiel sind die fixen Lagerpunkte 34 als Kreuzgelenke ausgebildet, über die die Torsionswellen 30a, 30b mit einer Zwischenwelle 36 drehfest miteinander verbunden sind. Um Relativbewegungen zwischen den Rahmenteilen 8a, 8c und den Torsionswellen 30a, 30b in axialer Richtung der Torsionswellen 30a, 30b ausgleichen zu können, sind die Torsionswellen 30a, 30b an ihren äußeren Enden über Gleitlager 38 mit den Rahmenteilen 8a, 8c verbunden. Die Torsionswellen 30a, 30b können also in ihrer axialen Richtung in den Gleitlagern 38 gleiten.

Aus Fig. 2 ist ersichtlich, dass an der Torsionswelle 30a auch eine in gestrichelten Linien dargestellte Rückwand 40 befestigt werden kann.

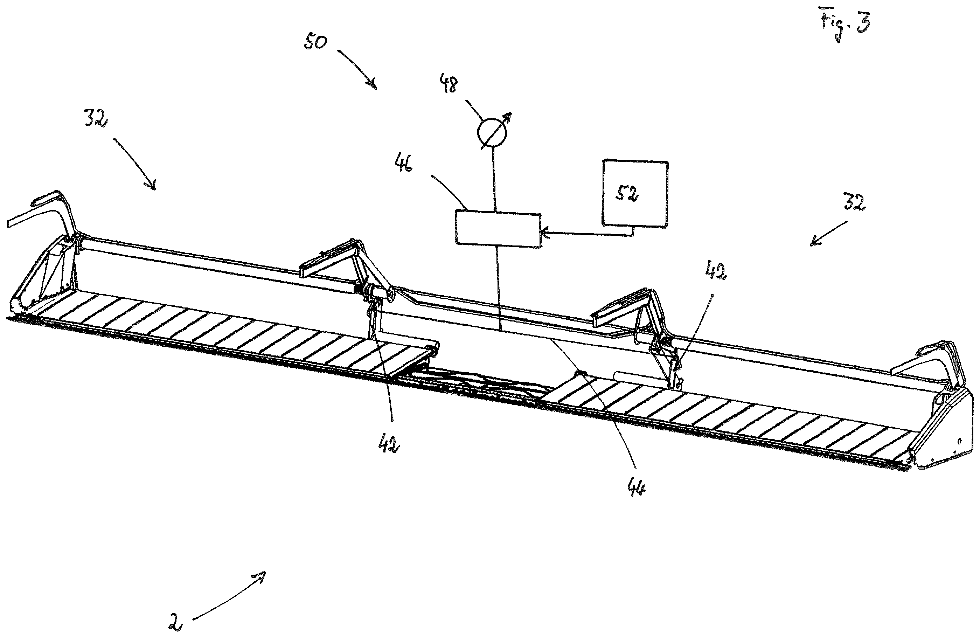

In Fig. 3 ist das in Fig. 2 vereinfacht dargestellte Schneidwerk 2 mit Tragwerken 32 gezeigt, die nicht durch eine Zwischenwelle 36 verbunden sind. In der in Figur 3 gezeigten Ansicht sind allerdings die Hydraulikzylinder 42 erkennbar, die im Ausführungsbeispiel die jeweiligen hydraulischen Verstellantriebe 28a, 28b, bilden. Die Hydraulikzylinder 42 bilden zusammen mit den Hydraulikleitungen 44, dem Hydraulikventil 46 und der Hydraulikpumpe 48 einen Bestandteil eines Hydraulikkreislaufs 50. In Fig. 3 sind die Hydraulikleitungen 44 aus Gründen der zeichnerischen Vereinfachung nur als ein Strich dargestellt Es versteht sich aber, dass die Hydraulikleitungen 44 in einem Hydraulikkreislauf mit entsprechenden Vor- und Rücklaufleitungen und entsprechend ausgestalteten Hydraulikventilen 46 ausgestaltet sind.

Über ein Hydraulikventil 46 kann der Hydraulikkreislauf zu den Hydraulikzylindern 42 vollständig verriegelt werden. Das ist über die Verwendung eines 2/2-Wegeventils möglich. In der Schließstellung des 2/2-Wegeventils blockiert es jeglichen Durchfluss von Hydraulikflüssigkeit, so dass die Hydraulikzylinder 42 in der aktuellen Ausfahrstellung blockiert sind. Der Hydraulikkreislauf fungiert auf diese Weise als eine statische Sicherung der schwebenden Last aus der Haspel 22, unter der dann Wartungsarbeiten vorgenommen werden können, wie beispielsweise der Austausch von Messerklingen an dem Schneidelement 14 oder die Beseitigung von Materialansammlungen auf den Förderflächen 16 oder an der Förderorganen 18. Das 2/2-Wegeventil kann beispielsweise elektrisch angesteuert werden, wie beispielsweise von einer Steuerungselektronik 52. Die Steuerungselektronik 52 kann als ein Schalter ausgebildet sein, mit der eine einfache Ein-/Aus-Schaltung möglich ist, oder es handelt sich um eine komplexere Steuerungselektronik 52, bei der softwaregestützte Bedieneingaben über Taster oder Touch-Bedienflächen an einem Bedienfeld möglich sind.

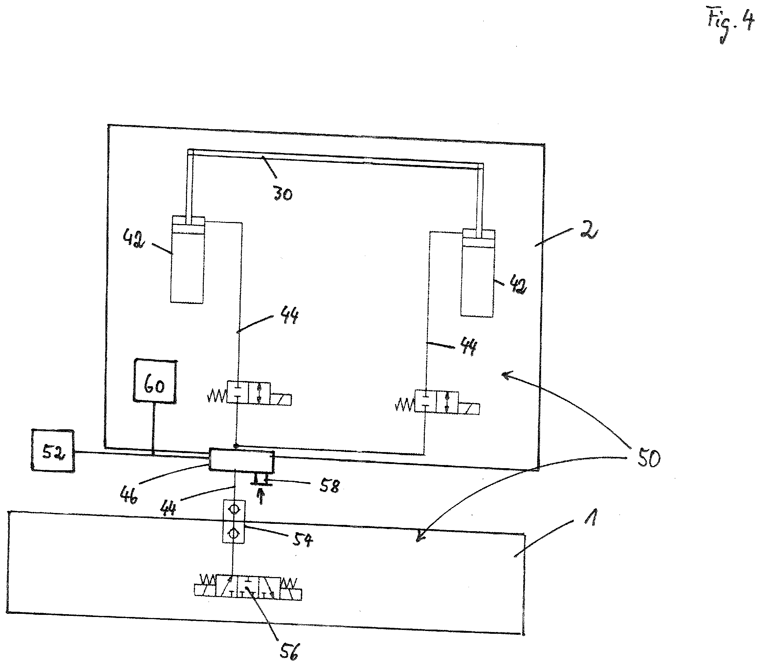

Fig. 4 zeigt einen schematischen Hydraulikschaltplan für die Haspelhöhenverstellung. An die Erntemaschine 1 ist ein Schneidwerk 2 angebaut. Die Hydraulik des Schneidwerks 2 ist an die Hydraulik der Erntemaschine 1 über eine Hydraulikkupplung 54 angeschlossen. Das Anheben und Absenken der Haspel 22 wird über entsprechende Schaltstellungen des 3/2-Wege-Hydraulikventils 56 gesteuert. Am Schneidwerk 2 befindet sich das Hydraulikventil 46, mit dem der Zu- und Abfluss der Hydraulikflüssigkeit zum und vom Schneidwerk 2 mit einer entsprechenden Schaltstellung des Hydraulikventils 46 verriegelt werden kann. Am Hydraulikventil 46 befindet sich ein Sicherheitsschalter 58, bei dessen Betätigung das Hydraulikventil 46 in eine Schaltstellung bewegt wird, in der es die Hydraulikleitung 44 sperrt, so dass keine Hydraulikflüssigkeit mehr zwischen der Erntemaschine 1 und dem Schneidwerk 2 fließen kann.

Das Hydraulikventil 46 ist mit einer Steuerungselektronik 52 verbunden, die im Ausführungsbeispiel zum Schneidwerk 2 gehört. Abweichend vom Ausführungsbeispiel kann die Steuerungselektronik 52 auch auf der Erntemaschine 1 angeordnet sein. Die Steuerungselektronik 52 ist mit einem Sensor 60 verbunden, der die aktuelle Höheneinstellung des Schneidwerks 2, den aktuellen Betriebsmodus des Schneidwerks 2 oder den Verriegelungsstatus einzelner Schneidwerkskomponenten ermittelt.

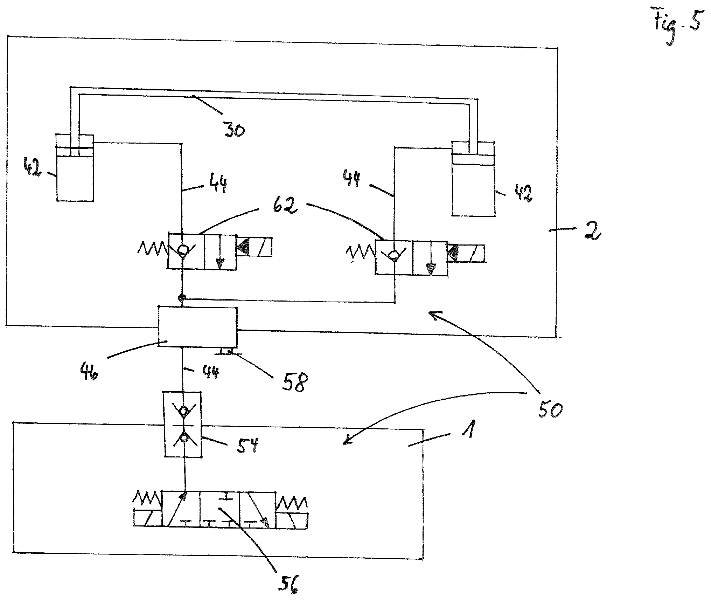

**In** Fig. 5 ist ein Hydraulikkreislauf 50 dargestellt, der zwei elektrisch entsperrbare Rückschlagventile 62 aufweist. Die Rückschlagventile 62 sperren in einer Schaltstellung den Rückfluss aus dem Hydraulikkreislauf 50, sie lassen aber den Zulauf durch das Rückschlagventil 62 zu. Eine solche Lösung ist sinnvoll, wenn die Haspel 22 mit einfach wirkenden Hydraulikzylindern 42 angehoben wird, die über eine gemeinsame Zu- und Ablaufleitung mit der Hydraulik der Erntemaschine 1 verbunden sind.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

1 Erntemaschine
2 Schneidwerk
4 Arbeitsbreite
6 Rahmen
8 Rahmenteil
10 Teilarbeitsbreite
12 Achse
14 Schneidelement
16 Förderfläche
18 Förderorgan
20 Abgabestelle
22 Haspel
24 Haspelteil
26 Haspeltragarm
28 Verstellantrieb
30 Torsionswelle
32 Haspeltragwerk
34 Lagerpunkt
36 Zwischenwelle
38 Gleitlager
40 Rückwand
42 Hydraulikzylinder
44 Hydraulikleitung
46 Hydraulikventil
48 Pumpe
50 Hydraulikkreislauf
52 Steuerungselektronik
54 Hydraulikkupplung
56 3/2-Wege-Hydraulikventil
58 Sicherheitsschalter
60 Sensor
62 Rückschlagventil

## Patentansprüche

1. Erntemaschine (1) mit einem Schneidwerk (2) zum Anbau an eine Erntemaschine (1) mit einem sich im Wesentlichen über die Arbeitsbreite (4) des Schneidwerks (2) erstreckenden Rahmen (6), an der Vorderseite des Schneidwerks (2) angeordneten und mit dem Rahmen (6) verbundenen Schneidelementen (14), Förderflächen (16) und Förderorganen (18) zur Abförderung des geschnittenen Ernteguts von den Schneidelementen (14) zu einer Abgabestelle (20), eines der Förderorgane (18) ist eine Haspel (22), die sich quer zur Arbeitsrichtung (A) des Schneidwerks (2) über die Arbeitsbreite des Schneidwerks (2) erstreckt, und die Haspel (22) ist von schwenkbeweglich am Rahmen (6) befestigten Haspeltragarmen (26) gehalten, die über einen hydraulischen Verstellantrieb mit einem Hydraulikkreislauf (50) zur Höhenverstellung der Haspel (22) höhenverstellbar sind, **dadurch gekennzeichnet, dass** der Hydraulikkreislauf (50), mit dem der hydraulische Verstellantrieb (28) antriebsverbunden ist, eine gesonderte Verriegelungsfunktion über ein Hydraulikventil (46) aufweist, das mit einem separaten Sicherheitsschalter betätigbar ist, der nur für die Aktivierung der Sicherheitsfunktion vorgesehen ist.

2. Erntemaschine (1) mit Schneidwerk (2) nach Anspruch 1, **dadurch gekennzeichnet, dass** es sich bei dem Hydraulikventil (46) um ein elektrisch angesteuertes Hydraulikventil (46) handelt, das bei einer Unterbrechung der Stromzufuhr durch eine mechanische Federrückstellung zwangsläufig in eine Schließstellung fährt.

3. Erntemaschine (1) mit Schneidwerk (2) nach Anspruch 1 oder 2, **dadurch gekennzeichnet, dass** das Hydraulikventil (46) in seiner Verriegelungsstellung die Zulauf- und Rücklaufleitung des hydraulischen Verstellantriebs (28) sperrt.

4. Erntemaschine (1) mit Schneidwerk (2) nach einem der vorhergehenden Ansprüche, **dadurch gekennzeichnet, dass** es sich bei dem Hydraulikventil (46) um ein elektrisches Magnetventil handelt, am Schneidwerk (2) und/oder an der Erntemaschine (1) ein Sicherheitsschalter (58) vorhanden ist, der mit der Elektrik des elektrischen Magnetventils (46) verbunden ist, und durch die Betätigung des Sicherheitsschalters (58) das Hydraulikventil (46) von der Stromzufuhr getrennt ist.

5. Erntemaschine (1) mit Schneidwerk (2) nach einem der vorhergehenden Ansprüche, **dadurch gekennzeichnet, dass** der Sicherheitsschalter (58) mit einer Steuerungselektronik (52) verbunden und von der Steuerungselektronik (52) bei Vorliegen eines Auslösekriteriums fernbetätigbar ist.

6. Erntemaschine (1) mit Schneidwerk (2) nach Anspruch 5, **dadurch gekennzeichnet, dass** die Steuerungselektronik (52) mit einem Sensor (60) verbunden ist, der die aktuelle Höheneinstellung des Schneidwerks (2), den aktuellen Betriebsmodus des Schneidwerks (2) oder den Verriegelungsstatus einzelner Schneidwerkskomponenten ermittelt.

7. Erntemaschine (1) mit Schneidwerk (2) nach einem der vorhergehenden Ansprüche, **dadurch gekennzeichnet, dass** der hydraulische Verstellantrieb (28) in einer vorwählbaren oder von einer Steuerungselektronik (52) vorgegebenen maximalen Hubhöhe der Haspel (22) verriegelbar ist.

8. Erntemaschine (1) mit Schneidwerk (2) nach einem der vorhergehenden Ansprüche, **dadurch gekennzeichnet, dass** das Hydraulikventil (46) mit einem Sensor (60) zur Ermittlung von Leckölströmen ausgestattet ist, der bei der Detektion eines Leckölstroms ein Warnsignal auslöst.

9. Erntemaschine (1) mit Schneidwerk (2) nach einem der vorhergehenden Ansprüche, **dadurch gekennzeichnet, dass** das Hydraulikventil (46) am Schneidwerk (2) angeordnet ist.

10. Erntemaschine (1) mit Schneidwerk (2) nach Anspruch 9, **dadurch gekennzeichnet, dass** sich der Sicherheitsschalter (58) auf der in Arbeitsrichtung des Schneidwerks (2) gesehen linken Rückseite des Schneidwerks (2) oder der Oberseite des linken Rahmens (6) befindet.

11. Erntemaschine (1) mit Schneidwerk (2) nach einem der vorhergehenden Ansprüche, **dadurch gekennzeichnet, dass** der Hydraulikkreislauf (50) ein elektrisch entsperrbares Rückschlagventil (62) aufweist, das den Rückfluss aus dem Hydraulikkreislauf (50) sperrt, aber den Zulauf durch das Rückschlagventil (62) zulässt.

12. Erntemaschine (1) mit Schneidwerk (2) nach einem der vorhergehenden Ansprüche, **dadurch gekennzeichnet, dass** das Hydraulikventil (46) den Verstellantrieben für einen einzelnen oder mehrere Haspeltragarme zugeordnet ist.

## Claims

1. Harvesting machine (1) with a cutting unit (2) for attachment to a harvesting machine (1) with a frame (6) that extends substantially over the working width (4) of the cutting unit (2), cutting elements (14) arranged at the front side of the cutting unit (2) and connected to the frame (6), conveying surfaces (16) and conveying elements (18) for discharging the cut crop from the cutting elements (14) to a discharge point (20), one of the conveying elements (18) is a reel (22) that extends transversely to the working direction (A) of the cutting unit (2) over the working width of the cutting unit (2), and the reel (22) is held by reel support arms (26) fastened to the frame (6) in a pivotably movable manner, which reel support arms (26) are height-adjustable via a hydraulic adjustment drive with a hydraulic circuit (50) for height adjustment of the reel (22), **characterized in that** the hydraulic circuit (50), to which the hydraulic adjustment drive (28) is drive-connected, has a separate locking function via a hydraulic valve (46), which can be actuated with a separate safety switch which is only provided for the activation of the safety function.

2. Harvesting machine (1) with cutting unit (2) according to Claim 1, **characterized in that** the hydraulic valve (46) is an electrically actuated hydraulic valve (46) which, upon interruption of the power supply, necessarily moves into a closed position by means of a mechanical spring return.

3. Harvesting machine (1) with cutting unit (2) according to Claim 1 or 2, **characterized in that** the hydraulic valve (46) in its locking position blocks the supply and return lines of the hydraulic adjustment drive (28).

4. Harvesting machine (1) with cutting unit (2) according to any one of the preceding claims, **characterized in that** the hydraulic valve (46) is an electric solenoid valve, a safety switch (58) is present on the cutting unit (2) and/or on the harvesting machine (1), which safety switch (58) is connected to the electrical system of the electric solenoid valve (46), and the hydraulic valve (46) is disconnected from the power supply by actuating the safety switch (58).

5. Harvesting machine (1) with cutting unit (2) according to any one of the preceding claims, **characterized in that** the safety switch (58) is connected to control electronics (52) and can be remotely actuated by the control electronics (52) when a trigger criterion is present.

6. Harvesting machine (1) with cutting unit (2) according to Claim 5, **characterized in that** the control electronics (52) are connected to a sensor (60) which determines the current height setting of the cutting unit (2), the current operating mode of the cutting unit (2) or the locking status of individual cutting unit components.

7. Harvesting machine (1) with cutting unit (2) according to any one of the preceding claims, **characterized in that** the hydraulic adjustment drive (28) can be locked at a preselectable or maximum lifting height of the reel (22) specified by control electronics (52).

8. Harvesting machine (1) with cutting unit (2) according to any one of the preceding claims, **characterized in that** the hydraulic valve (46) is equipped with a sensor (60) for detecting leakage oil flows, which triggers a warning signal upon detection of a leakage oil flow.

9. Harvesting machine (1) with cutting unit (2) according to any one of the preceding claims, **characterized in that** the hydraulic valve (46) is arranged on the cutting unit (2).

10. Harvesting machine (1) with cutting unit (2) according to Claim 9, **characterized in that** the safety switch (58) is located on the left rear side of the cutting unit (2) as seen in the working direction of the cutting unit (2) or on the upper side of the left frame (6).

11. Harvesting machine (1) with cutting unit (2) according to any one of the preceding claims, **characterized in that** the hydraulic circuit (50) has an electrically unlockable check valve (62) that blocks the backflow from the hydraulic circuit (50) but allows the inflow through the check valve (62).

12. Harvesting machine (1) with cutting unit (2) according to any one of the preceding claims, **characterized in that** the hydraulic valve (46) is assigned to the adjustment drives for one or more reel support arms.

## Revendications

1. Machine de récolte (1) comprenant un mécanisme de coupe (2) destiné à être monté sur une machine de récolte (1), avec un châssis (6) s'étendant sensiblement sur la largeur de travail (4) du mécanisme de coupe (2), des éléments de coupe (14) disposés sur le côté avant du mécanisme de coupe (2) et reliés au châssis (6), des surfaces de transport (16) et des organes de transport (18) pour évacuer la récolte depuis les éléments de coupe (14) vers un point de déchargement (20), l'un des organes de transport (18) étant un rabatteur (22) qui s'étend transversalement à la direction de travail (A) du mécanisme de coupe (2) sur la largeur de travail du mécanisme de coupe (2), et le rabatteur (22) étant maintenu par des bras de support de rabatteur (26) qui sont fixés de manière pivotante sur le châssis (6) et qui sont réglables en hauteur par l'intermédiaire d'un actionneur de réglage hydraulique comprenant un circuit hydraulique (50) pour le réglage en hauteur du rabatteur (22), **caractérisée en ce que** le circuit hydraulique (50), auquel est relié l'actionneur de réglage hydraulique (28), présente une fonction de verrouillage distincte par l'intermédiaire d'une vanne hydraulique (46) qui peut être actionnée par un interrupteur de sécurité séparé, lequel est prévu uniquement pour l'activation de la fonction de sécurité.

2. Machine de récolte (1) comprenant un mécanisme de coupe (2) selon la revendication 1, **caractérisée en ce que** la vanne hydraulique (46) est une vanne hydraulique (46) à commande électrique qui, en cas d'interruption de l'alimentation électrique, se déplace systématiquement vers une position de fermeture par un rappel mécanique par ressort.

3. Machine de récolte (1) comprenant un mécanisme de coupe (2) selon la revendication 1 ou 2, **caractérisée en ce que** la vanne hydraulique (46) bloque, dans sa position de verrouillage, les conduites d'admission et de retour de l'actionneur de réglage hydraulique (28).

4. Machine de récolte (1) comprenant un mécanisme de coupe (2) selon l'une quelconque des revendications précédentes, **caractérisée en ce que** la vanne hydraulique (46) est une électrovanne, **en ce qu'**un interrupteur de sécurité (58) relié au réseau électrique de l'électrovanne (46) est présent sur le mécanisme de coupe (2) et/ou sur la machine de récolte (1), et **en ce que** la vanne hydraulique (46) est séparée de l'alimentation électrique par l'actionnement de l'interrupteur de sécurité (58).

5. Machine de récolte (1) comprenant un mécanisme de coupe (2) selon l'une quelconque des revendications précédentes, **caractérisée en ce que** l'interrupteur de sécurité (58) est relié à une électronique de commande (52) et peut être actionné à distance par l'électronique de commande (52) en présence d'un critère de déclenchement.

6. Machine de récolte (1) comprenant un mécanisme de coupe (2) selon la revendication 5, **caractérisée en ce que** l'électronique de commande (52) est reliée à un capteur (60) qui détermine le réglage en hauteur actuel du mécanisme de coupe (2), le mode de fonctionnement actuel du mécanisme de coupe (2) ou l'état de verrouillage de composants individuels du mécanisme de coupe.

7. Machine de récolte (1) comprenant un mécanisme de coupe (2) selon l'une quelconque des revendications précédentes, **caractérisée en ce que** l'actionneur de réglage hydraulique (28) peut être verrouillé à une hauteur de levage maximale du rabatteur (22) qui peut être présélectionnée ou prédéfinie par une électronique de commande (52).

8. Machine de récolte (1) comprenant un mécanisme de coupe (2) selon l'une quelconque des revendications précédentes, **caractérisée en ce que** la vanne hydraulique (46) est équipée d'un capteur (60) pour déterminer des fuites d'huile internes, lequel capteur déclenche un signal d'avertissement lors de la détection d'une fuite d'huile interne.

9. Machine de récolte (1) comprenant un mécanisme de coupe (2) selon l'une quelconque des revendications précédentes, **caractérisée en ce que** la vanne hydraulique (46) est disposée sur le mécanisme de coupe (2).

10. Machine de récolte (1) comprenant un mécanisme de coupe (2) selon la revendication 9, **caractérisée en ce que** l'interrupteur de sécurité (58) se trouve sur le côté arrière gauche du mécanisme de coupe (2), vu dans la direction de travail du mécanisme de coupe (2), ou sur le côté supérieur gauche du châssis (6).

11. Machine de récolte (1) comprenant un mécanisme de coupe (2) selon l'une des revendications précédentes, **caractérisée en ce que** le circuit hydraulique (50) présente un clapet anti-retour (62) déverrouillable électriquement, qui bloque le flux de retour en provenance du circuit hydraulique (50) mais autorise l'admission à travers le clapet anti-retour (62).

12. Machine de récolte (1) comprenant un mécanisme de coupe (2) selon l'une quelconque des revendications précédentes, **caractérisée en ce que** la vanne hydraulique (46) est associée aux actionneurs de réglage pour un seul ou plusieurs bras de support de rabatteur.
